(19) **Europäisches Patentamt / European Patent Office / Office européen des brevets**

(11) **EP 4 600 970 A1**

(12) **EUROPEAN PATENT APPLICATION**
published in accordance with Art. 153(4) EPC

(43) Date of publication:
**13.08.2025 Bulletin 2025/33**

(21) Application number: **24870421.5**

(22) Date of filing: **06.09.2024**

(51) International Patent Classification (IPC):
**G21C 17/00** (2006.01)     **G06F 30/28** (2020.01)
**G06F 113/08** (2020.01)     **G06F 119/14** (2020.01)

(52) Cooperative Patent Classification (CPC):
**Y02E 30/30**

(86) International application number:
**PCT/CN2024/117604**

(87) International publication number:
**WO 2025/066875 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.04.2024 CN 202410498654**

(71) Applicants:
• **China Nuclear Power Engineering Co., Ltd.**
  **Shenzhen, Guangdong 518124 (CN)**
• **China Nuclear Power Design Company Ltd. (Shenzhen)**
  **Shenzhen, Guangdong 518100 (CN)**
• **CGN Power Co., Ltd.**
  **Shenzen, Guangdong 518026 (CN)**

(72) Inventors:
• **WANG, Xin**
  **Shenzhen, Guangdong 518124 (CN)**
• **MO, Shaojia**
  **Shenzhen, Guangdong 518124 (CN)**
• **DUAN, Yuangang**
  **Shenzhen, Guangdong 518124 (CN)**
• **FANG, Jian**
  **Shenzhen, Guangdong 518124 (CN)**
• **WANG, Dasheng**
  **Shenzhen, Guangdong 518124 (CN)**
• **DENG, Xiaoyun**
  **Shenzhen, Guangdong 518124 (CN)**
• **RAN, Xiaobing**
  **Shenzhen, Guangdong 518124 (CN)**
• **LI, Yuezhong**
  **Shenzhen, Guangdong 518124 (CN)**
• **LIU, Yanwu**
  **Shenzhen, Guangdong 518124 (CN)**

(74) Representative: **Westphal, Mussgnug & Partner, Patentanwälte mbB**
**Werinherstraße 79**
**81541 München (DE)**

(54) **METHOD FOR CONSTRUCTING AND CONTROLLING TURBULENCE FORM OF FLUID INSIDE REACTOR PRESSURE VESSEL**

(57) The application relates to a method for constructing and controlling turbulence morphology in a reactor pressure vessel, which includes the following steps: S1, obtaining a vortex relevant data, obtaining a temporal distribution characteristic, a spatial distribution characteristic, a power spectral density of the turbulence, and turbulence energy spectrum at the inlet region of each fuel assembly; S2, obtaining the water gap variation of the fuel assembly, and determining whether it is needed to modify the three-dimensional flow field model of the fuel assembly based on the water gap variation of the fuel assembly until the water gap of the fuel assembly does not change; S3, obtaining a core nuclear power fluctuation amplitude among the fuel assemblies; S4, determining whether the core nuclear power fluctuation amplitude falls within a target range, and if not, modifying the internal three-dimensional structure of reactor pressure vessel until the core nuclear power fluctuation amplitude falls within the target range. The application can eliminate or improve the core nuclear power fluctuation, reduce the wear of the reactor core grid, and ensure the safety of reactor operation.

S1: establishing a three-dimensional structure model of the reactor pressure vessel internals, and carrying out reactor internal flow field analysis/experiment to obtain a dynamic flow field in the reactor, obtaining a vortex relevant data, and a temporal distribution characteristic and spatial distribution characteristic of turbulence at the inlet region of each fuel assembly based on the dynamic flow field; and obtaining a power spectral density of turbulence at the inlet region of each fuel assembly based on the temporal distribution characteristic of the turbulence at the inlet region of each fuel assembly, and carrying out energy spectrum analysis on the turbulence to obtain the turbulence energy spectrum;

S2: establishing a three-dimensional flow field model of the fuel assembly, obtaining the water gap variation of the fuel assembly through the fuel assembly low-frequency oscillation analysis based on the vortex relevant data, the temporal distribution characteristic and spatial distribution characteristic of turbulence, and the turbulence energy spectrum at the inlet region of each fuel assembly, and determining whether it needs to modify the three-dimensional flow field model of the fuel assembly based on the water gap variation of the fuel assembly until the water gap of the fuel assembly does not change;

S3: establishing a reactor core calculation model, and obtaining a core nuclear power fluctuation amplitude among the fuel assemblies based on the result of the fuel assembly low-frequency oscillation analysis;

S4: determining whether the core nuclear power fluctuation amplitude among the fuel assemblies falls within a target range, if not, modifying the internal three-dimensional structure of the reactor pressure vessel, and repeating the steps S1 to S4 until the core nuclear power fluctuation amplitude falls within the target range.

FIG.2

**Description**

TECHNICAL FIELD

The application relates to the technical field of nuclear power. It more specifically relates to a method for constructing and controlling turbulence morphology in a reactor pressure vessel.

DESCRIPTION OF RELATED ART

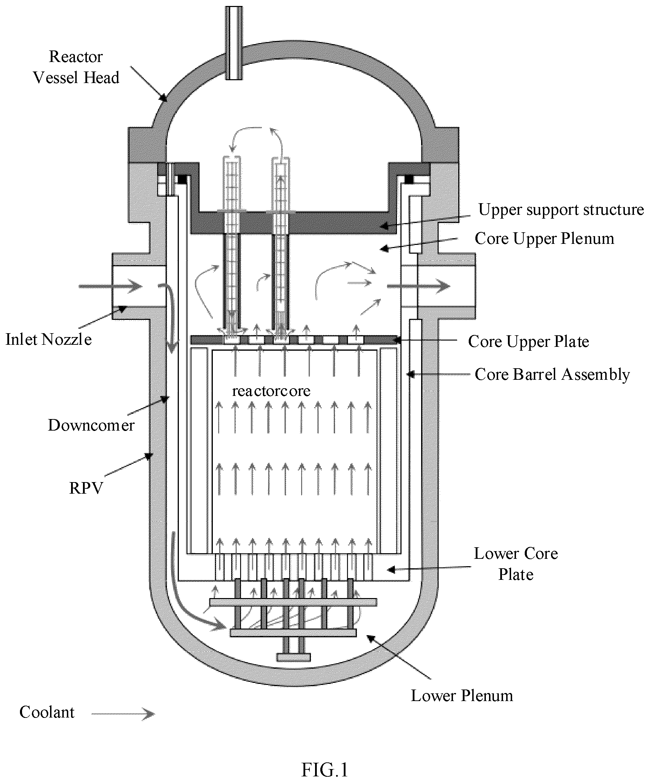

The reactor proper of the PWR consists of reactor pressure vessel (RPV), reactor vessel internals (RVI), control rod drive mechanism, reactor core components, reactor core instruments, and related components. The flow field in the reactor is shown in FIG. 1. Coolant enters the lower plenum from the inlet of the reactor pressure vessel and the downcomer annulus, due to the driving force of the reactor coolant main pump and the sharp change of the flow path geometry within the reactor pressure vessel, a series of multi-scale vortex streets are generated in the lower plenum of the reactor pressure vessel, which not only causes uneven flow distribution among fuel assemblies at different core locations but also induces significant flow pulsation response corresponding to each fuel assembly.

Currently, it is difficult to optimize the flow path geometry within the reactor pressure vessel through rational approaches, construct and control turbulence morphology in the reactor pressure vessel bottom plenum, to improve the influence of fluid on the vibration behavior of the fuel assembly and slow down or eliminate the low-frequency oscillation phenomenon of the fuel assembly.

BRIEF SUMMARY OF THE INVENTION

The technical problem to be solved by the application is to provide a method for constructing and controlling turbulence morphology in a reactor pressure vessel.

The technical scheme adopted by the embodiment of the application to solve the technical problems is as follows: constructing a method for constructing and controlling turbulence morphology in a reactor pressure vessel, which comprises the following steps: step S1, establishing a three-dimensional structure model of the reactor pressure vessel internals, carrying out reactor internal flow field analysis /experiment to obtain a dynamic flow field of the fluid in the reactor, obtaining a vortex relevant data and a temporal distribution characteristic and spatial distribution characteristic of turbulence at the inlet region of each fuel assembly based on the dynamic flow field; and obtaining a power spectral density of turbulence at the inlet region of each fuel assembly based on the temporal distribution characteristic of turbulence at the inlet region of each fuel assembly, and carrying out energy spectrum analysis on the turbulence to obtain a turbulence energy spectrum; Step S2, establishing a three-dimensional flow field model of the fuel assembly, obtaining a water gap variation of the fuel assembly through fuel assembly low-frequency oscillation analysis based on the vortex relevant data, the temporal distribution characteristic and spatial distribution characteristic of the turbulence, and the turbulence energy spectrum at the inlet region of each fuel assembly, and determining whether it is needed to modify the three-dimensional flow field model of the fuel assembly based on the water gap variation of the fuel assembly until the water gap of the fuel assembly does not change; Step S3, establishing a reactor core calculation model, and obtaining a core nuclear power fluctuation amplitude among the fuel assemblies based on the result of the fuel assembly low-frequency oscillation analysis; Step S4, determining whether the core nuclear power fluctuation amplitude among the fuel assemblies falls within a target range, if not, modifying the internal three-dimensional structure of reactor pressure vessel, and repeating the steps S1 to S4 until the core nuclear power fluctuation amplitude value falls within the target range.

In some embodiments, the step S1 comprises: step S11, establishing a three-dimensional structure model of a reactor pressure vessel internals, and carrying out reactor internal flow field analysis/experiment to obtain the dynamic flow field of the fluid in the reactor; Step S12, obtaining the vortex relevant data via image recognition techniques based on the dynamic flow field; Step S13, extracting an average flow rate at the inlet region of each fuel assembly in a representative time period to obtain a spatial distribution characteristic of the turbulence at the inlet region of each fuel assembly through the dynamic flow field; Step S14, extracting a variation value of the flow rate at the inlet region of each fuel assembly with time through the dynamic flow field, and obtaining a temporal distribution characteristic of the turbulence at the inlet region of each fuel assembly; Step S15, based on the temporal distribution characteristic of the turbulence at the inlet region of each fuel assembly, carrying out auto-power spectral analysis on the flow at the inlet region of each fuel assembly to obtain a power spectral density of the turbulence at the inlet region of each fuel assembly; Step S16: based on the vortex scale and the power spectral density of the turbulence at the inlet region of each fuel assembly, carrying out energy spectrum analysis on the turbulence to obtain the turbulence energy spectrum.

In some embodiments, the step S13 comprises: extracting an average flow rate at the inlet region of each fuel assembly in a representative time period through the dynamic flow field, obtaining a flow distribution coefficient at the inlet region of each fuel assembly based on the average flow rate at the inlet region of each fuel assembly, and obtaining a maximum flow distribution coefficient, a minimum flow distribution coefficient, and global spatial standard deviation of flow distribution at the inlet region of each fuel assembly based on the flow distribution coefficient, thereby, to obtain a spatial distribution characteristic of the turbulence at the inlet region of each fuel assembly; and/or, the step S14 comprises: extracting a variation value of the flow rate at the inlet region of each fuel assembly with time through the dynamic flow field, obtaining a fluid pulsation value at the inlet region of each fuel assembly based on the variation value of the flow rate at the inlet region of each fuel assembly with time, and obtaining a standard deviation value of the flow rate at the inlet region of each fuel assembly with time based on the fluid pulsation value, thereby, to obtain a temporal distribution characteristic of the turbulence at the inlet region of each fuel assembly.

In some embodiments, in the step S1, the vortex relevant data comprises the number, scale, frequency, and spatial distribution of the vortex.

In some embodiments, the step S2 comprises: step S21, establishing a three-dimensional flow field model by taking the reactor core as an object, and obtaining the deformation and vibration localization of the fuel assembly through fuel assembly low-frequency oscillation analysis based on the vortex relevant data, the temporal distribution characteristic and spatial distribution characteristic of the turbulence at the inlet region of each fuel assembly; Step S22, carrying out fuel assembly water gap analysis based on the deformation and vibration localization of the fuel assembly, and determining whether the water gap of the fuel assembly changes; if the water gap of the fuel assembly changes, adjusting the three-dimensional flow field model of the fuel assembly, and repeating the step S21 and the step S22 until the water gap of the fuel assembly does not change.

In some embodiments, the step S21 comprises: step S211, establishing a three-dimensional flow field model by taking the reactor core as an object, and obtaining the transverse flow distribution in the reactor core through hydrodynamic analysis based on the vortex relevant data, the temporal distribution characteristic and spatial distribution characteristic of the turbulence at the inlet region of each fuel assembly; Step S212: obtaining the lateral loads acting on different positions of the fuel assembly based on the transverse flow distribution in the reactor core; Step S213: obtaining the flow-induced vibration situation of the fuel assembly based on the lateral loads acting on different positions of the fuel assembly; and step S214:obtaining the deformation and vibration localization of the fuel assembly based on the flow-induced vibration situation of the fuel assembly.

In some embodiments, the step S21 comprises: establishing a three-dimensional flow field model by taking the reactor core as an object, and obtaining the deformation and vibration localization of the fuel assembly through the fuel assembly low-frequency oscillation analysis based on the vortex relevant data and the turbulence energy spectrum.

In some embodiments, the step S3 comprises: step S31, establishing a reactor core calculation model; Step S32, obtaining the neutron transport situation in the reactor core based on the water gap variation of the fuel assembly; Step S33, obtaining the heat generation power of the fuel assembly and the zonal loading of the fuel assembly; Step S34: based on the heat generation power of the fuel assembly, the neutron transport situation in the reactor core, the result of the fuel assembly low-frequency oscillation analysis and the zonal loading of the fuel assembly, obtaining a core nuclear power fluctuation amplitude among the fuel assemblies.

In some embodiments, the step S34 comprises: based on the heat generation power of fuel assembly, the neutron transport situation in the reactor core, the result of the fuel assembly low-frequency oscillation analysis and the zonal loading of the fuel assembly, obtaining a core nuclear power fluctuation amplitude among the fuel assemblies through the core nuclear power fluctuation analysis coupled nuclear-thermal-mechanical loads.

In some embodiments, the step S2 comprises: step S21, establishing a three-dimensional flow field model by taking the reactor core as an object, and obtaining the deformation and vibration localization of the fuel assembly through the fuel assembly low-frequency oscillation analysis based on the vortex relevant data, the temporal distribution characteristic and spatial distribution characteristic of turbulence at the inlet region of each fuel assembly; Step S22, carrying out fuel assembly water gap analysis based on the deformation and vibration localization of the fuel assembly, and determining whether the water gap of the fuel assembly changes; if the water gap of the fuel assembly changes, adjusting the three-dimensional flow field model of the fuel assembly, and repeating the step S21 and the step S22 until the water gap of the fuel assembly does not change; the step S34 comprises: obtaining a core nuclear power fluctuation amplitude among the fuel assemblies based on the heat generation power of the fuel assembly, the neutron transport situation in the reactor core, the vibration localization of the fuel assembly, and the zonal loading of the fuel assembly.

In some embodiments, the step S4 comprises: step S41, determining whether the core nuclear power fluctuation amplitude among the fuel assemblies falls within a target range, and if not, establishing a target limit range of the temporal distribution characteristic and spatial distribution characteristic of the turbulence at the inlet region of each fuel assembly based on the target range; Step S42, determining whether the temporal distribution characteristic and the spatial distribution characteristic of the turbulence at the inlet region of each fuel assembly obtained in step S1 falls within respective target limit ranges, if not, modifying the internal three-dimensional structure of reactor pressure vessel and repeat the step S1 until the temporal distribution characteristic and spatial distribution characteristic of the turbulence at the inlet region of each fuel assembly obtained in step S1 falls into respective target limit ranges; Step S43: repeating step S2 and step S3 to determine whether the core nuclear power fluctuation amplitude obtained in step S3 falls within the target range; if not, then modifying internal the three-dimensional structure of reactor pressure vessel again, and repeating the step S1, thestepS42, and the step S43 until the core nuclear power fluctuation amplitude falls within the target range.

In some embodiments, the step S1 further comprises: step S17,based on the dynamic flow field and the temporal distribution characteristic of the turbulence at the inlet region of each fuel assembly, obtaining the flow correlation coefficients between the inlet region of each fuel assembly and the inlet regions of the remaining fuel assemblies;

The step S2comprises: step S21, establishing a three-dimensional flow field model by taking the reactor core as an object, and obtaining the deformation, the vibration localization, and the low-frequency oscillation frequency of the fuel assembly through the fuel assembly low-frequency oscillation analysis based on the vortex relevant data, the temporal distribution characteristic and spatial distribution characteristic of the turbulence at the inlet region of each fuel assembly; Step S22, carrying out fuel assembly water gap analysis based on the deformation and vibration localization of the fuel assembly, and determining whether the water gap of the fuel assembly changes; if the water gap of the fuel assembly changes, adjusting the three-dimensional flow field model of the fuel assembly, and repeating the step S21 and the stepS22 until the water gap of the fuel assembly does not change;

The step S4 comprises: step S411, determining whether the core nuclear power fluctuation amplitude among the fuel assemblies falls within a target range, and if not, carrying out multi-parameter fitting on the flow distribution coefficient, fluid pulsation value, power spectral density, flow correlation coefficient, and turbulence energy spectrum with the low-frequency oscillation frequency and the core nuclear power fluctuation amplitude to obtain a multi-parameter fitting relationship; Step S412: based on the multi-parameter fitting relationship and the target range of core nuclear power fluctuation amplitude, establishing target limit ranges of the flow distribution coefficient, the fluid pulsation value, the power spectral density, the flow correlation coefficient, and the turbulence energy spectrum satisfying the target range; Step S42: determining whether the flow distribution coefficient, the fluid pulsation value, the power spectral density, the flow correlation coefficient, and the turbulence energy spectrum obtained in the step S1 falls within respective target limit ranges, if not, modifying the internal three-dimensional structure of the reactor pressure vessel, and repeating the step S1 until the flow distribution coefficient, the fluid pulsation value, the power spectral density, the flow correlation coefficient, and the turbulence energy spectrum obtained in the step S1 all fall within respective target limit ranges; Step S43: repeating the step S2 and step S3 to judge whether the core nuclear power fluctuation amplitude obtained in the step S3 falls within the target range; if not, modifying the internal three-dimensional structure of reactor pressure vessel again, and repeating the step S1, the step S42, and the step S43 until the core nuclear power fluctuation amplitude falls within the target range.

In some embodiments, the step S42 comprises: determining whether the flow distribution coefficient, the fluid pulsation value, the power spectral density, the flow correlation coefficient, and the turbulence energy spectrum obtained in the step S1 fall within respective target limit ranges, if not, establishing at least one turbulence control region in the reactor pressure vessel, improving the dynamic flow field morphology in the reactor pressure vessel by adding a vortex-breaking component in the at least one turbulence control region, and repeating step S1 until the flow distribution coefficient, the fluid pulsation value, the power spectral density, the flow correlation coefficient, and the turbulence energy spectrum obtained in step S1 all fall within respective target limit ranges.

The step S43 comprises: repeating the step S2 and the step S3, and determining whether the core nuclear power fluctuation amplitude obtained in the step S3 falls within the target range; if not, improving the dynamic flow field morphology in the reactor pressure vessel again, and repeating the step S1, the step S42, and the step S43 until the core nuclear power fluctuation amplitude falls within the target range.

In some embodiments, the number of the at least one turbulence control region is three, specifically an annular downcomer region, a lower plenum region, and an upper plenum region.

In some embodiments, in step S17, the flow correlation coefficient is calculated by formula 1, and the formula 1 is as follows:

$$C_{ab} = \frac{\overline{u_a \cdot u_b}}{\sqrt{\overline{u_a^2} \cdot \overline{u_b^2}}}; \qquad (1).$$

Wherein, $C_{ab}$ represents the flow correlation coefficient between the inlet region of fuel assembly a and the inlet region of fuel assembly b; $\overline{u_a}$ represents the average of the fluid pulsation values at the inlet regions of all fuel assemblies with the inlet region of fuel assembly a as the center; $\overline{u_b}$ represents the average of the fluid pulsation values at the inlet regions of all fuel assemblies with the inlet region of fuel assembly b as the center; $\overline{u_a^2}$ represents the variance of the fluid pulsation values atthe inlet regions of all fuel assemblies with the inlet region of fuel assembly a as the center; $\overline{u_b^2}$ represents the variance of the fluid pulsation values at the inlet regions of all fuel assemblies with the inlet region of fuel assembly b as the center.

The implementation of the embodiment of the invention has at least the following beneficial effects: by constructing step S1, the invention comprehensively considers the temporal distribution characteristics and spatial distribution characteristics, power spectral density, turbulence energy spectrum, and the vortex relevant data formed in the reactor, and constructing the turbulence morphology in the reactor pressure vessel, thus providing basic data support for the control of the turbulence morphology; by constructing step S2, the invention optimizes the flow field in the reactor, improves the flow field at the core inlet region, reduces the flow coherence between the inlet regions of the fuel assemblies, and avoids the problems of low-frequency oscillation of the fuel assemblies caused by the water gap variation of the fuel assemblies in turbulence. The application further improves the three-dimensional flow field in the reactor by modifying the internal three-dimensional structure of the reactor pressure vessel through the construction step S3 and step S4, and controls the turbulence morphology, to further reduce the flow coherence at the inlet region of the fuel assembly while ensuring that the water gap of the fuel assembly does not change, so that the core nuclear power fluctuation amplitude is within the target range, and further eliminate or improve the problems of the reactor core nuclear power fluctuation and low-frequency oscillation of the fuel assembly. Finally, the results of reducing the wear of the reactor core grid and ensuring the safety of reactor operation are achieved comprehensively.

BRIEF DESCRIPTION OF THE SEVERAL VIEWS OF THE DRAWINGS

The present application will be further described below in conjunction with the accompanying drawings and embodiments, in the accompanying drawings:

FIG. 1 is a schematic diagram of the flow field in a reactor pressure vessel in the prior art;
FIG. 2 is a flow chart of a method for constructing and controlling the turbulence morphology in a reactor pressure vessel in one embodiment of the application;
FIG. 3 is a flowchart of step S1 in the flowchart shown in FIG. 2;
FIG. 4 is a flowchart of step S2 in the flowchart shown in FIG. 2;
FIG. 5 is a flowchart of step S21 in the flowchart shown in FIG. 4;
FIG. 6 is a flowchart of step S3 in the flowchart shown in FIG. 2;
FIG. 7 is a flowchart of step S4 in the flowchart shown in FIG.2; and
FIG. 8 is a flowchart of step S4 in the flowchart shown in FIG. 2 in another embodiment.

DETAILED DESCRIPTION OF THE INVENTION

To have a clearer understanding of the technical features, purposes and effects of the present application, specific embodiments of the present application are described in detail against the accompanying drawings. In the following description, it is to be understood that "front", "rear", "upper", "lower", "left", "right', "longitudinal ", "transversal ", "vertical ", "horizontal", "top", "bottom", "inside", "outside", 'head', 'tail', etc. indicate orientations or positional relationships that are based on the orientations or positional relationships shown in the accompanying drawings, constructed and operated in a particular orientation, and are intended only to facilitate description of the present technical solution, and is not intended to indicate that the device or element referred to must have a particular orientation, and therefore is not to be construed as a limitation of the present application.

In the following description, specific details such as particular system structures, techniques, and the like are presented for the purpose of illustration and not for limitation, in order to provide a thorough understanding of embodiments of the present application. However, it will be apparent to one skilled in the art that the present application may be practiced in other embodiments without these specific details. In other cases, detailed descriptions of well-known systems, devices, circuits, and methods are omitted so as not to obscure the description of this application with unnecessary details.

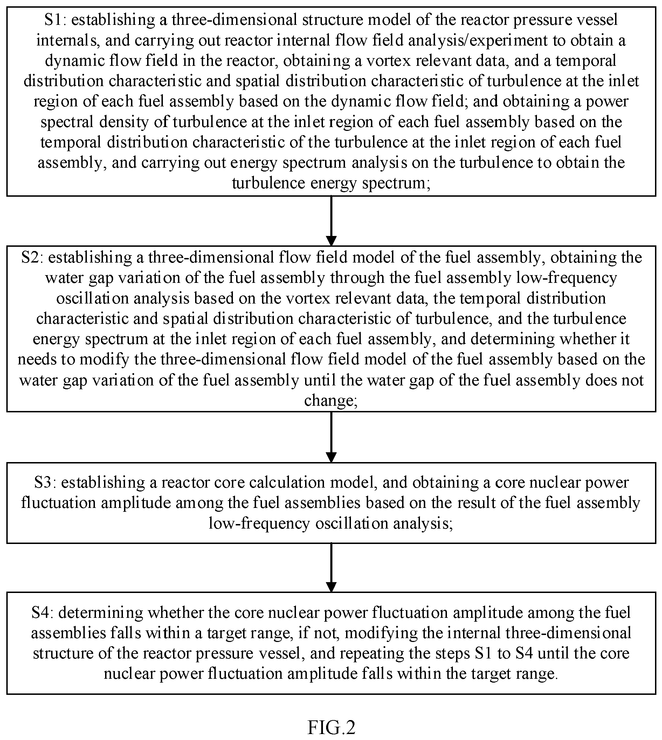

As shown in FIG. 2, the application constructs a method for constructing and controlling turbulence morphology in a reactor pressure vessel, which includes the following steps:

Step S1, establishing a three-dimensional structure model of the reactor pressure vessel internals, and carrying out reactor internal flow field analysis/experiment to obtain a dynamic flow field in the reactor; obtaining a vortex relevant data and a temporal distribution characteristic and spatial distribution characteristic of turbulence at the inlet region of each fuel assembly based on the dynamic flow field; and obtaining a power spectral density of turbulence at the inlet region of each fuel assembly based on the temporal distribution characteristic of turbulence at the inlet region of each fuel assembly, and carrying out energy spectrum analysis on the turbulence to obtain the turbulence energy spectrum. S2, establishing a three-dimensional flow field model of the fuel assembly, obtaining a water gap variation of the fuel assembly through fuel assembly low-frequency oscillation analysis based on the vortex relevant data, the temporal distribution characteristic and the spatial distribution characteristic of turbulence, and the turbulence energy spectrum at the inlet region of each fuel assembly, and determining whether it is needed to modify the three-dimensional flow field model of the fuel assembly based on the water gap variation of the fuel assembly until the water gap of the fuel assembly does not change. S3, establishing a reactor core calculation model, and obtaining a core nuclear power fluctuation amplitude among the fuel assemblies based on the result of the fuel assembly low-frequency oscillation analysis. S4, determining whether the core nuclear power fluctuation amplitude among the fuel assemblies falls within a target range, if not, modifying the internal three-dimensional structure of reactor pressure vessel, and repeating the steps S1 to S4 until the core nuclear power fluctuation amplitude falls within the target range.

It should be understood that in step S4, the "target range" is the known numerical range of the reactor type of the nuclear power plant. Different reactor types have slightly different requirements for restriction on the target range. In this embodiment, the target range is 5% to 10% (including 5% and 10%).

In this application, vortex relevant data, and the temporal distribution characteristic, spatial distribution characteristics and power spectral density of turbulence and turbulence energy spectrum at the inlet region of each fuel assembly are obtained in step S1. The construction of turbulence morphology is completed, which provides data support for subsequent analysis and control of turbulence morphology. In this application, the time characteristic of the fluid and the vortex relevant data generated are taken into account, combined with the spatial distribution characteristic of the fluid, to improve the flow field in the reactor core, ensure that the fluid entering the reactor core with a relatively stable and uniform state, improve the turbulence morphology, and then eliminate or mitigate the issue of low-frequency oscillations in fuel assemblies caused by changes in the water gap between assemblies, which caused by the large coherence between fuel assemblies, the flow pulsation response and the vortex momentum transport from turbulence, to control the turbulence morphology/behavior within the desired/required limits. By analyzing the reactor core nuclear power fluctuation, the application can make the turbulence morphology in the reactor core meet the requirements of the reactor on reactor core nuclear power amplitude fluctuation on the premise of meeting the situation constructed in step S2, and modify the internal three-dimensional structure of the reactor pressure vessel through step S4, to further improve the three-dimensional flow field in the reactor and control the turbulence morphology, thereby further reducing the flow coherence at the inlet region of the fuel assembly while ensuring that the water gap of the fuel assembly does not change, further ensuring that the reactor core nuclear power fluctuation amplitude falls within a target range, and then eliminating or improving the problem of the reactor core nuclear power fluctuation. Furthermore, by eliminating or improving the reactor core nuclear power fluctuation and fuel assembly low-frequency oscillation, the effects of reducing reactor core grid wear and ensuring reactor operation safety are achieved comprehensively.

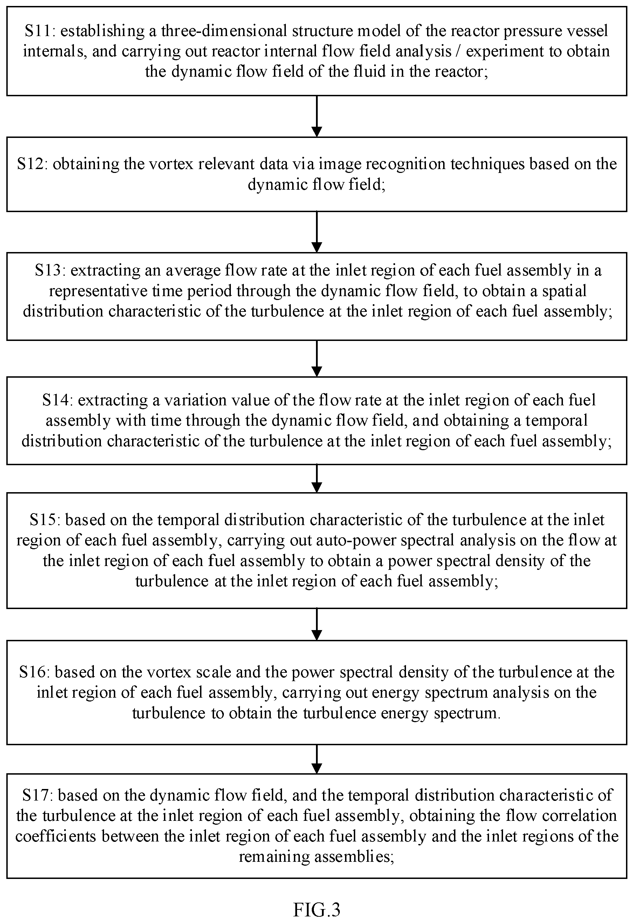

As shown in FIG. 3, the step S1 includes: step S11, establishing a three-dimensional structure model of the reactor pressure vessel internals, and carrying out reactor internal flow field analysis/experiment to obtain the dynamic flow field of the fluid in the reactor. Step S12: obtaining the vortex relevant data by the image recognition techniques based on the dynamic flow field. Step S13: extracting an average flow rate at the inlet region of each fuel assembly in a representative time period to obtain a spatial distribution characteristic of turbulence at the inlet region of each fuel assembly through the dynamic flow field. Step S14: extracting a variation value of the flow rate at the inlet region of each fuel assembly with time through the dynamic flow field to obtain a temporal distribution characteristic of the turbulence at the inlet region of each fuel assembly. Step S15: based on the temporal distribution characteristic of turbulence at the inlet region of each fuel assembly, carrying out auto-power spectral analysis on the flow at the inlet region of each fuel assembly to obtain a power spectral density of the turbulence at the inlet region of each fuel assembly. Step S16: based on the vortex scale and the power spectral density of turbulence at the inlet region of each fuel assembly, and carrying out energy spectrum analysis of turbulence to obtain the turbulence energy spectrum. Step S17: based on the dynamic flow field and the temporal distribution characteristic of the turbulence at the inlet region of each fuel assembly, obtaining the flow correlation coefficient between the inlet region of each fuel assembly and the inlet regions of the remaining fuel assemblies.

In some embodiments, in step S11, the reactor internal flow field analysis can be performed by a computational fluid dynamics (CFO) software (such as ANSYS CFX, ANSYS FLUENT, STAR CCM+, etc.), and the three-dimensional flow field model of the reactor internals is established by the software, and the network is divided. By setting boundary conditions, turbulence models, etc., the dynamic flow field at each position or section can be obtained by the post-processing function therein. The "experiment" can be achieved by making a visual scale model (generally, the scale can be selected within the range of 1:5 to 1:10), the model primarily includes a reactor pressure vessel, in-vessel components, core simulator assembly, inlet/outlet nozzles, etc. The inlet/outlet nozzles are connected to the test loop system to simulate the coolant circulation process within the reactor. During this process, pressure sensors can be arranged at various typical positions of the test device (such as inlet/ outlet nozzles, downcomer, lower plenum, core inlet/outlet) to measure the pressure drop between the different sections. The flow data of each fuel assembly inlet can also be obtained by the manner of setting a rotating vortex flow meter at each fuel assembly inlet. The experimental device can also be made transparent. By adding tracer particles into the coolant and taking photographs by particle image velocimetry (PIV), are taken to obtain the dynamic flow field of typical regions (such as downcomer, lower plenum and core inlet).

In some embodiments, in step S12, the " image recognition techniques " can be recognized by image processing software, such as extracting velocity distribution (scalar or vector), pressure distribution, vortex representative parameters (such as turbulent kinetic energy, turbulent dissipation rate, etc.) or flow rate data (such as inlet region of each fuel assembly) of some typical cross sections or inlets/outlets through the post-processing function of computational fluid dynamics (CFO) software, etc, to obtain the vortex relevant data by analyzing the velocity vector plots at different positions and times. Or obtaining the vortex relevant data by processing image analysis software (such as MATLAB software). It is also possible to manually measure the vortex relevant data based on the obtained dynamic flow field conditions through human intervention.

In some embodiments, in step S12, the vortex relevant data includes the number, scale, frequency, and spatial distribution of the vortex.

In some embodiments, the step S13 includes: extracting an average flow rate at inlet region of each fuel assembly in a representative time period through the dynamic flow field, obtaining the flow distribution coefficient at the inlet region of each fuel assembly based on the average flow rate at inlet region of each fuel assembly, and obtaining a maximum flow distribution coefficient, a minimum flow distribution coefficient, and global spatial standard deviation of flow distribution at inlet region of each fuel assembly based on the flow distribution coefficient, thereby to obtain a spatial distribution characteristic of the turbulence at the inlet region of each fuel assembly.

In which, the representative time period is 5-50s.

It should be understood that the "flow distribution coefficient "represents the average flow rate at the inlet of a fuel assembly in a representative time period.

In some embodiments, the step S14 includes: extracting a variation value of the flow rate at the inlet region of each fuel assembly with time through the dynamic flow field, obtaining a fluid pulsation value at the inlet region of each fuel assembly based on the variation value of the flow rate at inlet region of each fuel assembly with time, and obtaining a standard deviation value of the flow rate at inlet region of each fuel assembly with time based on the fluid pulsation value, thereby, to obtain a temporal distribution characteristic of the turbulence at the inlet region of each fuel assembly.

It should be understood that, both steps S13 and S14 can be obtained by the aforementioned flow field analysis software and computational fluid dynamics (CFO) software. The steps S13 and S14 can be executed in any order or performed concurrently, as there is no sequential dependency between them..

In the step S15, the auto-power spectral analysis of the flow at the inlet region of each fuel assembly can be realized by the Fourier transform method, using the temporal distribution characteristic of turbulence at the inlet region of each fuel assembly as input. In this step S15, the temporal distribution characteristic on the flow at the inlet region of each fuel assembly can be converted into frequency domain distribution characteristic by auto-power spectral analysis, that is, the time domain data can be converted into frequency domain data, and the turbulence pulsation frequency at the inlet of each fuel assembly can be obtained.

In some embodiments, the energy spectrum analysis of turbulence (turbulence energy spectrum is a function expressing the contribution of turbulence velocity fluctuations at different frequencies to turbulent flow kinetic energy) can be based on Kolmogorov Theory (that is, the energy of a large-scale vortex is transferred to a small-scale vortex, and the small-scale vortex dissipates the energy at a smaller scale, because the steady state is considered, so the input energy, the transferred energy, and the finally dissipated energy are equal), and the turbulence energy spectrum (the kinetic energy and frequency of turbulence) can be calculated. Then obtaining the relationship among turbulence scale, turbulence pulsation frequency, and turbulence energy spectrum.

It should be understood that the energy spectrum analysis of turbulence can be realized by programming software such as MATLAB.

In some embodiments, in step S17, the "flow correlation coefficient" can be calculated by Formula 1, and the formula 1 is as follows:

$$C_{ab} = \frac{\overline{u_a} \cdot \overline{u_b}}{\sqrt{\overline{u_a^2} \cdot \overline{u_b^2}}}; (1),$$

Where $C_{ab}$ represents the flow correlation coefficient between the inlet region of fuel assembly a and the inlet region of fuel assembly b; $\overline{u_a}$ represents the average of the fluid pulsation values at the inlet regions of all fuel assemblies with the inlet region of fuel assembly a as the center; $\overline{u_b}$ represents the average of the fluid pulsation values at the inlet regions of all fuel assemblies with the inlet region of fuel assembly b as the center; $\overline{u_a^2}$ represents the variance of the fluid pulsation values at the inlet regions of all fuel assemblies with the inlet region of fuel assembly a as the center; $\overline{u_b^2}$ represents the variance of the fluid pulsation values at the inlet regions of all fuel assemblies with the inlet region of fuel assembly b as the center.

For example, when the reactor core consists of a 3×3 fuel assembly array, $\overline{u_a}$ in formula 1 represents the average of the fluid pulsation values of the inlet regions of nine fuel assemblies within the range of 3*3 centered on the inlet region of fuel assembly a (for example, one of the 3*3 fuel assemblies is fuel assembly a ). $\overline{u_a^2}$ represents the variance of the fluid pulsation values of the inlet regions of nine fuel assemblies within the range of 3*3 centered on the inlet region of fuel assembly a. $\overline{u_b}$ and $\overline{u_b^2}$ follow the same definition.

Through this step S17, the correlation of each fuel assembly in the reactor core can be obtained, for example, when the flow rate at a certain position increases, determining whether the flow rate at other positions increases (positive correlation) or decreases (negative correlation), or has no obvious influence. By bringing the correlation of fuel assemblies into the analysis, the correlation between fuel assemblies can be controlled within a defined range through subsequent operation steps, thereby reducing the effects of turbulence between fuel assemblies.

It should be understood that the sequence of step S17 in step S1 may be before step S15 (or step S16) or be synchronized with it, and it only needs to be after step S14.

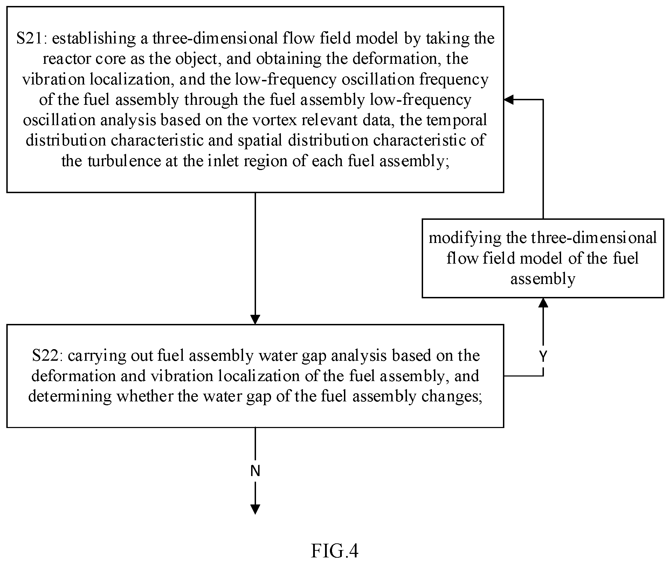

As shown in FIG. 4, the step S2 includes: step S21, establishing a three-dimensional flow field model by taking the reactor core as an object, and obtaining the deformation and vibration localization of the fuel assembly through fuel assembly low-frequency oscillation analysis based on the vortex relevant data, the temporal distribution characteristic and the spatial distribution characteristic of turbulence at the inlet region of each fuel assembly. Step S22: carrying out fuel assembly water gap analysis based on the deformation and vibration localization of the fuel assembly, and determining whether the water gap of the fuel assembly changes. If the water gap of the fuel assembly changes, adjusting the three-dimensional flow field model of the fuel assembly, and repeating step S21 and the step S22 until the water gap of the fuel assembly does not change.

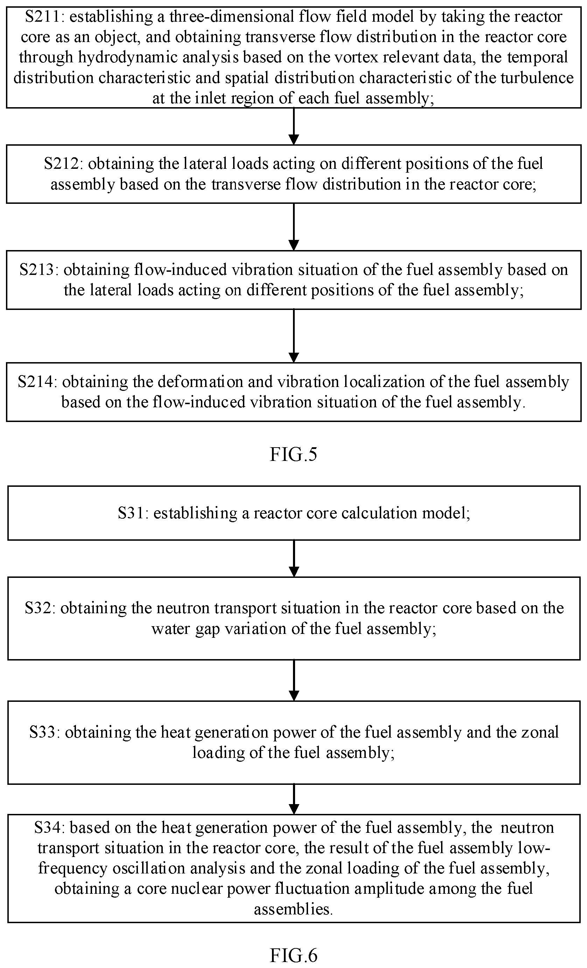

Specifically, as shown in FIG. 5, the step S21 includes: step S211, establishing a three-dimensional flow field model by taking the reactor core as an object, and obtaining the transverse flow distribution in the reactor core through hydrodynamic analysis based on the vortex relevant data, the temporal distribution characteristic and the spatial distribution characteristic of the turbulence at the inlet region of each fuel assembly. Step S212: obtaining the lateral loads acting on different positions of the fuel assembly based on the transverse flow distribution in the reactor core. Step S213, obtaining the flow-induced vibration situation of the fuel assembly based on the lateral loads acting on different positions of the fuel assembly. Step S214: obtaining the deformation and vibration localization of the fuel assembly based on the flow-induced vibration situation of the fuel assembly.

In some embodiments, the step S211 can be realized by computational fluid dynamics (CFO) software (representative software includes ANSYS CFX, ANSYS FLUENT, STAR CCM+, etc.).

Specifically, in the process of establishing a three-dimensional flow field model, it can also be realized by the computational fluid dynamics (CFO) software, in which the fuel assembly can be set as a porous medium at the assembly-scale(the simulated structure of the resistance coefficient and porosity of each position in the porous medium can be obtained based on existing experiments or analytical calculations). Further, the flow field in the reactor core can be calculated by using the computational fluid dynamics (CFO) software, and taking the temporal distribution characteristics of turbulence at the inlet region of each fuel assembly, the number, frequency, and scale of vortexes as inputs. Then, based on the post-processing function of the computational fluid dynamics (CFO) software, obtaining the parameter data such as pressure and velocity at each position in the reactor core, that is, obtaining the fluid response characteristic in the reactor core area, and then obtaining the transverse flow distribution in the reactor core. The mapping relationship between the turbulent momentum transport, pressure transient response, and fluid property response in the core region, providing critical input for fuel assembly low-frequency oscillation analysis.

It should be understood that, the "turbulent momentum transport" represents the variation of turbulent mass flow and velocity direction with time. The "pressure transient response" represents the pressure variations at the inlet region of each fuel assembly with time. The turbulent momentum transport and pressure transient response can be obtained in the "temporal distribution characteristics of turbulence at the inlet region of each fuel assembly" in step S14. The "fluid property response in the core region" is the result of the flow rate velocity and pressure distribution in the fuel assembly. Because there is a gap between porous medium representing fuel assemblies in the constructed three-dimensional flow field model (that is, there is a gap between fuel assemblies), a transverse flow will be generated at the gap (the primary coolant flows upward from the core inlet (located at the lower elevation) exits via the core outlet, however, due to the complex structure of fuel assembly and non-uniform inlet flow distribution /pressure conditions, inter-assembly cross-flow develops between fuel assemblies, that is, transverse flow). The obtained fluid property response in the reactor core region is the result of the flow rate velocity and pressure distribution in the fuel assembly, in which the flow includes transverse flow and longitudinal flow, that is, the transverse flow distribution in the reactor core region can be obtained from the fluid response characteristics in the reactor core area.

It should be understood that the transverse flow and the fuel deformation parameters of the fuel assembly in the existing reactor are calculated based on the "time-average" flow rate over a period of time, which cannot reflect the actual transverse flow state and deformation phenomenon at different times. Based on the comprehensive analysis of the temporal distribution characteristics and spatial distribution characteristics of the three-dimensional flow field, the application can not only reflect the transverse flow and the fuel deformation of the fuel assembly in the reactor at a certain time or a certain time period but also reflect the transverse flow and the fuel deformation of the fuel assembly in the reactor at different times, to make the analysis of the transverse flow in the reactor more comprehensive and ensure the accuracy of the analysis in the subsequent step.

In other alternative embodiments, because the turbulence energy spectrum can reflect the distribution of turbulent kinetic energy in different large and small vortexes through velocity fluctuations, the fundamental structure of the turbulence field can be intuitively provided from one side. Therefore, the step S21 in some embodiments can also be implemented through the following steps: establishing a three-dimensional flow field model with the reactor core as an object, and obtaining the deformation and vibration localization of the fuel assembly through the fuel assembly low-frequency oscillation analysis based on the vortex relevant data and the turbulence energy spectrum.

In some embodiments, in steps S212 and S213, Fluid-Structure Interaction (FSI) Software (such a s an sys or other special software) can be used to calculate the transverse hydraulic load being subjected to the fuel assembly at different positions, and then the flow-induced vibration of the fuel assembly can be calculated by the Fluid-Structure Interaction (FSI) Software based on the transverse hydraulic load.

Based on the analysis of the flow-induced vibration, it can be determined whether the vibration of the fuel assembly is within a required limit range. When it is within the required limit range, the flow-elastic instability ratio of the fuel assembly (that is, the ratio of critical transverse flow velocity to effective excitation flow velocity) is less than the limit, and the flow-elastic instability phenomenon will not occur. The fuel rod is under the action of transverse flow, and the maximum vibration amplitude caused by turbulence will not exceed the limit; during the set life, the fuel rod will not experience excessive wear caused by flow-induced vibration. Then, based on the analysis of the flow-induced vibration, the safety of the fuel assembly during operation is ensured.

In some embodiments, in step S214, the conclusions of the deformation, vibration localization, and the low-frequency oscillation frequency of the fuel assembly can be determined through core neutronic heating calculations. It should be understood that the core neutronic heating is obtained by the reactor core thermal analysis software dedicated to nuclear power. It is calculated based on the enrichment, moderator concentration and neutron population of fuel assembly and so on.

It should be understood that in step S22, the "water gap" is the gap between fuel assemblies. If a fuel assembly is deformed in step S24 and the vibration localization changes (that is, the fuel rod deviates from the original position due to oscillation), the water gap will change. "Adjusting the three-dimensional flow field model of fuel assembly" means adjusting the water gap between the fuel assemblies.

As shown in FIG. 6, the step S3 includes: step S31, establishing a reactor core calculation model; Step S32, obtaining the neutron transport situation in the reactor core based on the water gap variation of the fuel assembly; Step S33, obtaining the heat generation power of the fuel assembly and the zonal loading of the fuel assembly; Step S34: based on the heat generation power of the fuel assembly, the neutron transport situation in the reactor core, the result of the fuel assembly low-frequency oscillation analysis and the zonal loading of the fuel assembly, obtaining a core nuclear power fluctuation amplitude among the fuel assemblies.

Among them, the "reactor core calculation model" represents the three-dimensional calculation model of the reactor core geometry (including each group of fuel assemblies) being constructed based on the fuel assembly dimension, the number of assemblies, and the arrangement of fuel assemblies in the reactor core (internal fuel rod structures within each assembly in this model can be appropriately simplified, such as being replaced by a porous medium model).

It should be understood that the "zonal loading of the fuel assembly" is the loading distribution of fuel elements in the reactor core. For example, in some large nuclear power plants, a non-uniform enrichment zoning fuel loading strategy is generally adopted. For example, in the conventional three-zone loading mode, fuels with different enrichment levels are arranged in three concentric zones, and the highest-enrichment fuel are loaded in the outer zone and fuel assemblies with other enrichment levels are loaded in the inner zone. The purpose of this is to flatten radial power distribution and avoid higher power peaks in the central region. During refueling, the longest-used assemblies are discharged, other assemblies are shifted inward, and fresh fuel assemblies are loaded on the periphery. In some nuclear power plants, in order to improve the utilization rate of fuel, improve the availability and comprehensive economy of the power plant, reduce the leakage of the pipeline, and reduce neutron fluence on the pressure vessel, the loading mode with low neutron leakage is adopted, that is, the fresh fuel assembly is placed near the center of the reactor and the irradiated fuel is placed at the periphery of the reactor core. The "thermal power of the fuel assembly" can be calculated based on parameters including the heat generation rate of nuclear fuel per unit volume and the geometric dimension of the fuel assembly.

It should be understood that since the acquisition of the heat generation power of the fuel assembly and the zonal loading of the fuel assembly is not affected by other steps of this method, the step S33 has no sequential relationship with step S31 and stepS32, and the step S33 can be performed before the step S31 and/or stepS32, also can be in synchronization with steps S31 and S32.

In some embodiments, the core nuclear power fluctuation amplitude values among the fuel assemblies can be obtained through the core nuclear power fluctuation analysis coupled nuclear-thermal-mechanical load. That is, the step S34 includes: based on the heat generation power of the fuel assembly, the neutron transport situation in the reactor core, the result of the fuel assembly low-frequency oscillation analysis and the zonal loading of the fuel assembly, obtaining the core nuclear power fluctuation amplitude among the fuel assemblies through the reactor core nuclear power fluctuation analysis coupled nuclear-thermal-mechanical load.

In some embodiments, the result of the fuel assembly low-frequency oscillation analysis of the on which this step S34 is based is the situation of the vibration localization of the fuel assembly. That is, step S34 further includes: obtaining core nuclear power fluctuation amplitude among the fuel assemblies based on the heat generation power of the fuel assembly, the neutron transport situation in the reactor core, the result of the low-frequency oscillation analysis, and the zonal loading of the fuel assembly.

It should be understood that the neutron transport situation in the reactor core is related to the gap size between fuel assemblies, and flow-induced vibration will cause the gap size of fuel assemblies to change. Therefore, in step S32, the neutron transport situation in the reactor core can be obtained through the situation of low-induced vibration obtained in step S23 and the water gap (gap) variation of fuel assemblies caused by it.

In some embodiments, the neutron transport situation in the reactor core of the step S32 can be calculated by neutron heat generation in the reactor core through the reactor core thermal calculation software involved in step S24 based on the flow-induced vibration of the fuel assembly.

In some embodiments, in step S34, carrying out "the reactor core nuclear power fluctuation analysis coupled nuclear-thermal-mechanical load" by nuclear-thermal-mechanical coupling calculation software dedicated to nuclear power. Taking the heat generation power of the fuel assembly, the neutron transport situation in the reactor core, and the fuel assembly vibration localization as boundary conditions input, obtaining the core nuclear power fluctuation amplitude between the fuel assemblies.

It should be understood that the "core nuclear power fluctuation amplitude" represents the ratio fluctuation between the power values at various core locations and the average power.

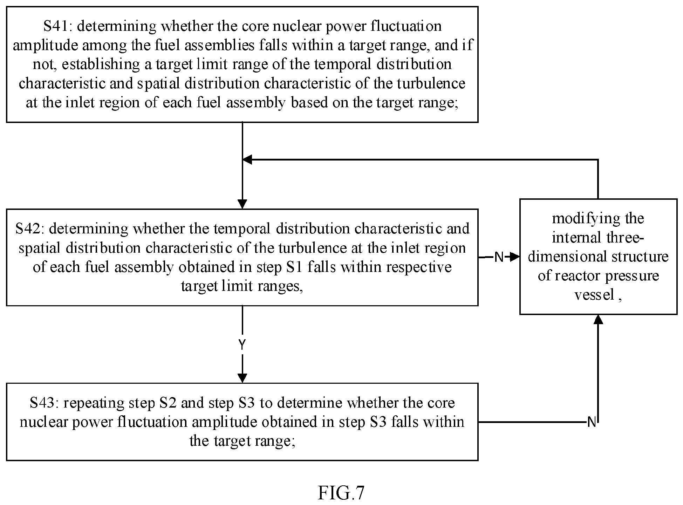

As shown in FIG. 7, step S4 includes: step S41, determining whether the core nuclear power fluctuation amplitude among the fuel assemblies falls within a target range, and if not, establishing a target limit range of the temporal distribution characteristic and spatial distribution characteristic of the turbulence at the inlet region of each fuel assembly based on the target range. Step S42: determining whether the temporal distribution characteristic and spatial distribution characteristic of the turbulence at the inlet region of each fuel assembly obtained in step S1 falls within respective target limit ranges; if not, modifying the three-dimensional structure of reactor pressure vessel internals and repeat step S1 until the temporal distribution characteristic and spatial distribution characteristic of the turbulence at the inlet region of each fuel assembly obtained in step S1 falls within respective target limit ranges. Step S43: repeating step S2 and step S3 to determine whether the core nuclear power fluctuation amplitude obtained in step S3 falls within the target range. If not, then modifying the internal three-dimensional structure of reactor pressure vessel again, and repeating step S1, stepS42, and stepS43 until the core nuclear power fluctuation amplitude falls within the target range.

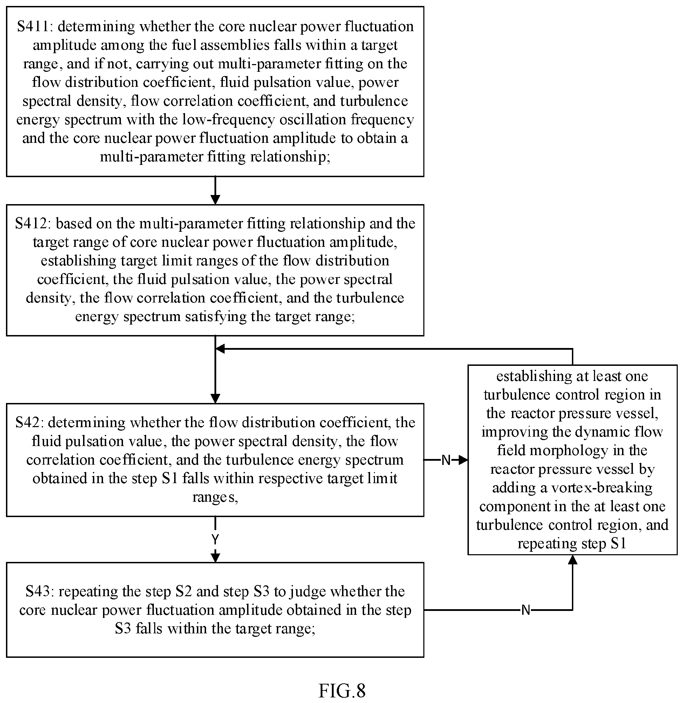

As shown in FIG. 8, in some embodiments, this step S41 includes: Step S411, determining whether the core nuclear power fluctuation amplitude among the fuel assemblies falls within a target range, and if not, carrying out multi-parameter fitting on the flow distribution coefficient, fluid pulsation value, power spectral density, flow correlation coefficient, and turbulence energy spectrum with the low-frequency oscillation frequency and the core nuclear power fluctuation amplitude to obtain a multi-parameter fitting relationship. Step S412: based on the multi-parameter fitting relationship and the target range of core nuclear power fluctuation amplitude, establishing target limit ranges of the flow distribution coefficient, the fluid pulsation value, the power spectral density, the flow correlation coefficient, and turbulence energy spectrum satisfying the target range condition.

The Step S42 includes: determining whether the flow distribution coefficient, the fluid pulsation value, the power spectral density, the flow correlation coefficient, and turbulence energy spectrum obtained in step S1 falls within respective target limit ranges, if not, modifying the internal three-dimensional structure of the reactor pressure vessel, and repeating step S1 until the flow distribution coefficient, fluid pulsation value, power spectral density, flow correlation coefficient, and turbulence energy spectrum obtained in step S1 all falls within respective target limit ranges.

In some embodiments, in step S411, multi-parameter fitting can be performed by mathematical software (such as MATLAB) to obtain a multi-parameter fitting relationship. It should be understood that the "multi-parameter fitting relationship" can be a relationship formula or a relationship table. This step S412 can also be calculated by mathematical software (such as MATLAB).

In some embodiments, "modifying the internal three-dimensional structure of reactor pressure vessel " can be realized by adding/reducing/changing vortex-breaking components in the reactor pressure vessel. Therefore, step S42 includes: determining whether the flow distribution coefficient, the fluid pulsation value, the power spectral density, the flow correlation coefficient, and the turbulence energy spectrum obtained in the step S1 falls within respective target limit ranges, if not, establishing at least one turbulence control region in the reactor pressure vessel, improving the dynamic flow field morphology in the reactor pressure vessel by adding a vortex-breaking component in at least one turbulence control region, and repeating step S1 until the flow distribution coefficient, fluid pulsation value, power spectral density, flow correlation coefficient, and turbulence energy spectrum obtained in step S1 all falls within respective target limit ranges.

This step S43 includes repeating step S2 and step S3, and determining whether the core nuclear power fluctuation amplitude obtained in the step S3 falls within the target range. If not, improving the dynamic flow field morphology in the reactor pressure vessel again, and repeating steps S1, S42, and S43 until the core nuclear power fluctuation amplitude falls within the target range.

As shown in FIG. 1, in this embodiment, the number of turbulence control regions is three, specifically an annular downcomer region, a lower plenum region, and an upper plenum region of the reactor pressure vessel.

In other alternative embodiments, a vortex-breaking component can also be selectively added in the annular downcomer region and/or the lower plenum region, and/or the upper plenum region.

In some embodiments, the vortex-breaking component can be a grid plate, a turbo grid plate, a guide plate, and other structures with various shapes, or other component that can break up a large vortex into a small vortex, to reduce the influence of the vortex on the reactor fuel assembly and improve the turbulence morphology in the reactor pressure vessel.

In some other alternative embodiments, an original component structure in the reactor pressure vessel can be improved, such as changing the position, without adding a vortex-breaking component, to improve the internal turbulence morphology.

It should be understood that in step S43, the purpose of "modifying the internal three-dimensional structure of reactor pressure vessel again" is to improve the dynamic flow field morphology in the reactor pressure vessel, which can be achieved by changing the position of the original vortex-breaking components, adding or reducing vortex-breaking components, etc.

Because the flow correlation coefficient is the basis for determining the core inlet flow coherence, based on the correlation coefficient, the correlation between the changing trends of the flow at each position of the reactor core inlet can be analyzed, which affects the subsequent nuclear power fluctuation amplitude. Therefore, in some embodiments, in step S42, after the dynamic flow field morphology in the reactor pressure vessel is improved and repeating step S1, the flow correlation coefficient can be judged in advance after the flow correlation coefficient measurement is completed and before proceeding to other steps, and then the nuclear power fluctuation amplitude can be roughly judged. If the flow correlation coefficient is obviously unreasonable, then the subsequent measurement can be stopped when repeating step S17 (this is because step S17 can be advanced to step S15 and step S16), and the dynamic flow field morphology in the reactor pressure vessel can be directly improved again to save part of the workload.

Because different turbulent flow patterns will cause vortexes with different scales and intensities, the existence of these vortexes will cause non-uniform flow distribution at the inlet of different fuel assemblies, which will fluctuate with time and have different frequencies, and the flow among each fuel assembly will also affect each other. Momentum and energy caused by these flows are transferred into the internal of the reactor core, which will cause pressure and flow changes in the internal of the reactor core, and the transverse flow causing large fluctuation of power will cause large transverse hydraulic load, which in turn will cause flow-induced vibration, component oscillation, grid wear and so on.

It should be understood that under the current technology, the flow field analysis of the reactor lower plenum and the flow field, structure, and power analysis of the fuel assembly in the reactor core are established based on the "time-average" flow rate over a certain period, but it fails to establish the relationship between the turbulence morphology, turbulence evolution and turbulence energy spectrum in the reactor lower plenum and the fuel assembly low-frequency oscillation and the core nuclear power fluctuation, and due to the lack of turbulence control techniques.

Through step S411 and stepS412, target limit values for various parameters are established, thereby providing outcome criteria for improving the dynamic flow field morphology inside the reactor pressure vessel. Furthermore, constructing vortex-breaking components in the turbulence control region of the reactor to break down large-scale vortexes into small ones, then the internal flow field of the pressure vessel can be changed, thereby to change the parameters such as scale, frequency and intensity of turbulence, and improve the flow field state of the lower plenum and the core fuel assembly (including: reduced disparity between maximum and minimum flow distribution coefficients, decreased fluid pulsation (standard deviation) in fuel assemblies, Weakened inter-assembly correlation, transverse flow, fuel deformation, and so on between fuel assemblies), Ultimately, the turbulence morphology in the reactor pressure vessel can be controlled to meet the target range of core nuclear power fluctuation amplitude, thus eliminating or improving the impacts of turbulence at reactor core inlet on reactor core nuclear power fluctuation , fuel assembly low-frequency oscillation and grid-to-rod fretting wear.

It can be understood that the above embodiments only express part of the implementation of this application, and the description is more specific and detailed, but it cannot be understood as limiting the patent scope of this application; it should be pointed out that for ordinary technicians in this field, the above technical features can be freely combined without departing from the concept of this application, and several modifications and improvements can be made, which all belong to the protection scope of this application; therefore, all equivalent transformations and modifications with the scope of the claims of this application should belong to the scope of the claims of this application.

**Claims**

1. A method for constructing and controlling turbulence morphology in a reactor pressure vessel, comprising the following steps:

   S1: establishing a three-dimensional structure model of the reactor pressure vessel internals, and carrying out reactor internal flow field analysis/experiment to obtain a dynamic flow field in the reactor, obtaining a vortex relevant data, and a temporal distribution characteristic and spatial distribution characteristic of turbulence at the inlet region of each fuel assembly based on the dynamic flow field; and obtaining a power spectral density of turbulence at the inlet region of each fuel assembly based on the temporal distribution characteristic of the turbulence at the inlet region of each fuel assembly, and carrying out energy spectrum analysis on the turbulence to obtain the turbulence energy spectrum;
   S2: establishing a three-dimensional flow field model of the fuel assembly, obtaining the water gap variation of the fuel assembly through the fuel assembly low-frequency oscillation analysis based on the vortex relevant data, the temporal distribution characteristic and spatial distribution characteristic of turbulence, and the turbulence energy spectrum at the inlet region of each fuel assembly, and determining whether it needs to modify the three-dimensional flow field model of the fuel assembly based on the water gap variation of the fuel assembly until the water gap of the fuel assembly does not change;
   S3: establishing a reactor core calculation model, and obtaining a core nuclear power fluctuation amplitude among the fuel assemblies based on the result of the fuel assembly low-frequency oscillation analysis;
   S4: determining whether the core nuclear power fluctuation amplitude among the fuel assemblies falls within a target range, if not, modifying the internal three-dimensional structure of the reactor pressure vessel, and repeating the steps S1 to S4 until the core nuclear power fluctuation amplitude falls within the target range.

2. The method for constructing and controlling turbulence morphology in a reactor pressure vessel according to claim 1, wherein the step S1 comprises the following steps:

   step S11: establishing a three-dimensional structure model of the reactor pressure vessel internals, and carrying out reactor internal flow field analysis / experiment to obtain the dynamic flow field of the fluid in the reactor;
   step S12: obtaining the vortex relevant data via image recognition techniques based on the dynamic flow field;
   step S13: extracting an average flow rate at the inlet region of each fuel assembly in a representative time period through the dynamic flow field, to obtain a spatial distribution characteristic of the turbulence at the inlet region of each fuel assembly;
   step S14: extracting a variation value of the flow rate at the inlet region of each fuel assembly with time through the dynamic flow field, and obtaining a temporal distribution characteristic of the turbulence at the inlet region of each fuel assembly;
   step S15: based on the temporal distribution characteristic of the turbulence at the inlet region of each fuel assembly, carrying out auto-power spectral analysis on the flow at the inlet region of each fuel assembly to obtain a power spectral density of the turbulence at the inlet region of each fuel assembly;
   step S16: based on the vortex scale and the power spectral density of the turbulence at the inlet region of each fuel assembly, carrying out energy spectrum analysis on the turbulence to obtain the turbulence energy spectrum.

3. The method for constructing and controlling turbulence morphology in a reactor pressure vessel according to claim 2, wherein the step S13 comprises the following steps:

   extracting an average flow rate at the inlet region of each fuel assembly in a representative time period through the dynamic flow field, obtaining a flow distribution coefficient at the inlet region of each fuel assembly based on the average flow rate at the inlet region of each fuel assembly, and obtaining a maximum flow distribution coefficient, a minimum flow distribution coefficient, and global spatial standard deviation of the flow distribution at the inlet region of each fuel assembly based on the flow distribution coefficient, thereby to obtain a spatial distribution characteristic of the turbulence at the inlet region of each fuel assembly; and/or
   the step S14 comprises: extracting a variation value of the flow rate at the inlet region of each fuel assembly with time through the dynamic flow field, obtaining a fluid pulsation value at the inlet region of each fuel assembly based on the variation value of the flow rate at the inlet region of each fuel assembly with time, and obtaining the standard deviation value of the flow rate at the inlet region of each fuel assembly with time based on the fluid pulsation value, thereby to obtain a temporal distribution characteristic of the turbulence at the inlet region of each fuel assembly.

4. The method for constructing and controlling turbulence morphology in a reactor pressure vessel according to claim 1, wherein in the step S1, the vortex relevant data comprises the number, scale, frequency, and spatial distribution of the vortex.

5. The method for constructing and controlling turbulence morphology in a reactor pressure vessel according to claim 1, wherein the step S2 comprises the following steps:

> step S21: establishing a three-dimensional flow field model by taking a reactor core as an object, and obtaining the deformation and vibration localization of the fuel assembly through fuel assembly low-frequency oscillation analysis based on the vortex relevant data, the temporal distribution characteristic and spatial distribution characteristic of the turbulence at the inlet region of each fuel assembly;
> step S22: carrying out fuel assembly water gap analysis based on the deformation and vibration localization of the fuel assembly, and determining whether the water gap of the fuel assembly changes; if the water gap of the fuel assembly changes, modifying the three-dimensional flow field model of the fuel assembly, and repeating the step S21 and the step S22 until the water gap of the fuel assembly does not change.

6. The method for constructing and controlling turbulence morphology in a reactor pressure vessel according to claim 5, wherein the step S21 comprises following steps:

> step S211: establishing a three-dimensional flow field model by taking the reactor core as an object, and obtaining transverse flow distribution in the reactor core through hydrodynamic analysis based on the vortex relevant data, the temporal distribution characteristic and spatial distribution characteristic of the turbulence at the inlet region of each fuel assembly;
> step S212: obtaining the lateral loads acting on different positions of the fuel assembly based on the transverse flow distribution in the reactor core;
> step S213: obtaining flow-induced vibration situation of the fuel assembly based on the lateral loads acting on different positions of the fuel assembly;
> step S214: obtaining the deformation and vibration localization of the fuel assembly based on the flow-induced vibration situation of the fuel assembly.

7. The method for constructing and controlling turbulence morphology in a reactor pressure vessel according to claim 5, wherein the step S21 comprises the following steps:
establishing a three-dimensional flow field model by taking the reactor core as an object, and obtaining the deformation and vibration localization of the fuel assembly through fuel assembly low-frequency oscillation analysis based on the vortex relevant data and the turbulence energy spectrum.

8. The method for constructing and controlling turbulence morphology in a reactor pressure vessel according to claim 1, wherein the step S3 comprises the following steps:

> step S31: establishing a reactor core calculation model;
> step S32: obtaining the neutron transport situation in the reactor core based on the water gap variation of the fuel assembly;
> step S33: obtaining the heat generation power of the fuel assembly and the zonal loading of the fuel assembly;
> step S34: based on the heat generation power of the fuel assembly, the neutron transport situation in the reactor core, the result of the fuel assembly low-frequency oscillation analysis and the zonal loading of the fuel assembly, obtaining a core nuclear power fluctuation amplitude among the fuel assemblies.

9. The method for constructing and controlling turbulence morphology in a reactor pressure vessel according to claim 8, wherein step S34 comprises:
based on the heat generation power of the fuel assembly, the neutron transport situation in the reactor core, the result of the fuel assembly low-frequency oscillation analysis and the zonal loading of the fuel assembly, obtaining a core nuclear power fluctuation amplitude among the fuel assemblies through the core nuclear power fluctuation analysis coupled nuclear-thermal-mechanical loads.

10. The method for constructing and controlling turbulence morphology in a reactor pressure vessel according to claim 8, wherein the step S2 comprises:

> step S21: establishing a three-dimensional flow field model by taking the reactor core as the object, and obtaining the deformation and vibration localization of the fuel assembly through the fuel assembly low-frequency oscillation analysis based on the vortex relevant data, the temporal distribution characteristic and spatial distribution characteristic of the turbulence at the inlet region of each fuel assembly;
> step S22: carrying out fuel assembly water gap analysis based on the deformation and vibration localization of the fuel assembly, and determining whether the water gap of the fuel assembly changes; if the water gap of the fuel assembly changes, adjusting the three-dimensional flow field model of the fuel assembly, and repeating the step S21 and the step S22 until the water gap of the fuel assembly does not change;

the step S34 comprises: obtaining a core nuclear power fluctuation amplitude among the fuel assemblies based on the heat generation power of the fuel assembly, the neutron transport situation in the reactor core, the vibration localization of the fuel assembly, and the zonal loading of the fuel assembly.

11. The method for constructing and controlling turbulence morphology in a reactor pressure vessel according to claim 1, wherein the step S4 comprises the following steps:

    step S41: determining whether the core nuclear power fluctuation amplitude among the fuel assemblies falls within a target range, and if not, establishing a target limit range of the temporal distribution characteristic and spatial distribution characteristic of the turbulence at the inlet region of each fuel assembly based on the target range;

    step S42: determining whether the temporal distribution characteristic and spatial distribution characteristic of the turbulence at the inlet region of each fuel assembly obtained in step S1 falls within respective target limit ranges, if not, modify the internal three-dimensional structure of the reactor pressure vessel and repeat the step S1 until the temporal distribution characteristic and spatial distribution characteristic of the turbulence at the inlet region of each fuel assembly obtained in step S1 falls within respective target limit ranges;

    step S43: repeating step S2 and step S3 to determine whether the core nuclear power fluctuation amplitude obtained in step S3 falls within the target range;

    if not, modifying the internal three-dimensional structure of reactor pressure vessel again, and repeating the step S1, the step S42, and the step S43 until the core nuclear power fluctuation amplitude falls within the target range.

12. The method for constructing and controlling turbulence morphology in a reactor pressure vessel according to claim 2, wherein the step S1 further comprises the following steps:

    step S17: based on the dynamic flow field, and the temporal distribution characteristic of the turbulence at the inlet region of each fuel assembly, obtaining the flow correlation coefficients between the inlet region of each fuel assembly and the inlet regions of the remaining assemblies;

the step S2 comprises the following steps:

    step S21: establishing a three-dimensional flow field model by taking the reactor core as the object, and obtaining the deformation, the vibration localization, and the low-frequency oscillation frequency of the fuel assembly through the fuel assembly low-frequency oscillation analysis based on the vortex relevant data, the temporal distribution characteristic and spatial distribution characteristic of the turbulence at the inlet region of each fuel assembly;

step S22: carrying out fuel assembly water gap analysis based on the deformation and vibration localization of the fuel assembly, and determining whether the water gap of the fuel assembly changes; if the water gap of the fuel assembly changes, modifying the three-dimensional flow field model of the fuel assembly, and repeating the step S21 and the step S22 until the water gap of the fuel assembly does not change;

the step S4 comprises the following steps:

    step S411: determining whether the core nuclear power fluctuation amplitude among the fuel assemblies falls within a target range, and if not, carrying out multi-parameter fitting on the flow distribution coefficient, fluid pulsation value, power spectral density, flow correlation coefficient, and turbulence energy spectrum with the low-frequency oscillation frequency and the core nuclear power fluctuation amplitude to obtain a multi-parameter fitting relationship;

    step S412: based on the multi-parameter fitting relationship and the target range of core nuclear power fluctuation amplitude, establishing target limit ranges of the flow distribution coefficient, the fluid pulsation value, the power spectral density, the flow correlation coefficient, and the turbulence energy spectrum satisfying the target range;

    step S42: determining whether the flow distribution coefficient, the fluid pulsation value, the power spectral density, the flow correlation coefficient, and the turbulence energy spectrum obtained in the step S1 falls within respective target limit ranges, if not, modifying the internal three-dimensional structure of the reactor pressure vessel, and repeating the step S1 until the flow distribution coefficient, the fluid pulsation value, the power spectral density, the flow correlation coefficient, and the turbulence energy spectrum obtained in the step S1 all fall within respective target limit ranges;

step S43: repeating the step S2 and step S3 to judge whether the core nuclear power fluctuation amplitude obtained in the step S3 falls within the target range; if not, modifying the internal three-dimensional structure of reactor pressure vessel again, and repeating the step S1, the stepS42, and the steps43 until the core nuclear power fluctuation amplitude falls within the target range.

13. The method for constructing and controlling turbulence morphology in a reactor pressure vessel according to claim 12, wherein the step S42 comprises:

determining whether the flow distribution coefficient, the fluid pulsation value, the power spectral density, the flow correlation coefficient, and the turbulence energy spectrum obtained in the step S1 falls within respective target limit ranges, if not, establishing at least one turbulence control region in the reactor pressure vessel, improving the dynamic flow field morphology in the reactor pressure vessel by adding a vortex-breaking component in the at least one turbulence control region, and repeating step S1 until the flow distribution coefficient, the fluid pulsation value, the power spectral density, the flow correlation coefficient, and the turbulence energy spectrum obtained in step S1 all fall within respective target limit ranges;

the step S43 comprises:

repeating the step S2 and the step S3, and determining whether the core nuclear power fluctuation amplitude obtained in the step S3 falls within the target range; if not, improving the dynamic flow field morphology in the reactor pressure vessel again, and repeating the step S1, the step S42, and the step S43 until the core nuclear power fluctuation amplitude falls within the target range.

14. The method for constructing and controlling turbulence morphology in a reactor pressure vessel according to claim 13, wherein the number of the at least one turbulence control region is three, specifically a downcomer region, a lower plenum region, and an upper plenum region.

15. The method for constructing and controlling turbulence morphology in a reactor pressure vessel according to claim 12, wherein in the step S17, the flow correlation coefficient is calculated by formula 1, and the formula 1 is as follows:

$$C_{ab} = \frac{\overline{u_a \cdot u_b}}{\sqrt{\overline{u_a^2 \cdot u_b^2}}}; \; (1)$$

Wherein, $C_{ab}$ represents the flow correlation coefficient between the inlet region of fuel assembly a and the inlet region of fuel assembly b; $\overline{u_a}$ represents the average of the fluid pulsation values at the inlet regions of all fuel assemblies with the inlet region of fuel assembly a as the center; $\overline{u_b}$ represents the average of the fluid pulsation values at the inlet regions of all fuel assemblies with the inlet region of fuel assembly bas the center; $\overline{u_a^2}$ represents the variance of the fluid pulsation values at the inlet regions of all fuel assemblies with the inlet region of fuel assembly a as the center; $\overline{u_b^2}$ represents the variance of the fluid pulsation values at the inlet regions of all fuel assemblies with the inlet region of fuel assembly b as the center.

FIG.1

S1: establishing a three-dimensional structure model of the reactor pressure vessel internals, and carrying out reactor internal flow field analysis/experiment to obtain a dynamic flow field in the reactor, obtaining a vortex relevant data, and a temporal distribution characteristic and spatial distribution characteristic of turbulence at the inlet region of each fuel assembly based on the dynamic flow field; and obtaining a power spectral density of turbulence at the inlet region of each fuel assembly based on the temporal distribution characteristic of the turbulence at the inlet region of each fuel assembly, and carrying out energy spectrum analysis on the turbulence to obtain the turbulence energy spectrum;

↓

S2: establishing a three-dimensional flow field model of the fuel assembly, obtaining the water gap variation of the fuel assembly through the fuel assembly low-frequency oscillation analysis based on the vortex relevant data, the temporal distribution characteristic and spatial distribution characteristic of turbulence, and the turbulence energy spectrum at the inlet region of each fuel assembly, and determining whether it needs to modify the three-dimensional flow field model of the fuel assembly based on the water gap variation of the fuel assembly until the water gap of the fuel assembly does not change;

↓

S3: establishing a reactor core calculation model, and obtaining a core nuclear power fluctuation amplitude among the fuel assemblies based on the result of the fuel assembly low-frequency oscillation analysis;

↓

S4: determining whether the core nuclear power fluctuation amplitude among the fuel assemblies falls within a target range, if not, modifying the internal three-dimensional structure of the reactor pressure vessel, and repeating the steps S1 to S4 until the core nuclear power fluctuation amplitude falls within the target range.

FIG.2

S11: establishing a three-dimensional structure model of the reactor pressure vessel internals, and carrying out reactor internal flow field analysis / experiment to obtain the dynamic flow field of the fluid in the reactor;

S12: obtaining the vortex relevant data via image recognition techniques based on the dynamic flow field;

S13: extracting an average flow rate at the inlet region of each fuel assembly in a representative time period through the dynamic flow field, to obtain a spatial distribution characteristic of the turbulence at the inlet region of each fuel assembly;

S14: extracting a variation value of the flow rate at the inlet region of each fuel assembly with time through the dynamic flow field, and obtaining a temporal distribution characteristic of the turbulence at the inlet region of each fuel assembly;

S15: based on the temporal distribution characteristic of the turbulence at the inlet region of each fuel assembly, carrying out auto-power spectral analysis on the flow at the inlet region of each fuel assembly to obtain a power spectral density of the turbulence at the inlet region of each fuel assembly;

S16: based on the vortex scale and the power spectral density of the turbulence at the inlet region of each fuel assembly, carrying out energy spectrum analysis on the turbulence to obtain the turbulence energy spectrum.

S17: based on the dynamic flow field, and the temporal distribution characteristic of the turbulence at the inlet region of each fuel assembly, obtaining the flow correlation coefficients between the inlet region of each fuel assembly and the inlet regions of the remaining assemblies;

FIG.3

S21: establishing a three-dimensional flow field model by taking the reactor core as the object, and obtaining the deformation, the vibration localization, and the low-frequency oscillation frequency of the fuel assembly through the fuel assembly low-frequency oscillation analysis based on the vortex relevant data, the temporal distribution characteristic and spatial distribution characteristic of the turbulence at the inlet region of each fuel assembly;

modifying the three-dimensional flow field model of the fuel assembly

S22: carrying out fuel assembly water gap analysis based on the deformation and vibration localization of the fuel assembly, and determining whether the water gap of the fuel assembly changes;

Y

N

FIG.4

S211: establishing a three-dimensional flow field model by taking the reactor core as an object, and obtaining transverse flow distribution in the reactor core through hydrodynamic analysis based on the vortex relevant data, the temporal distribution characteristic and spatial distribution characteristic of the turbulence at the inlet region of each fuel assembly;

↓

S212: obtaining the lateral loads acting on different positions of the fuel assembly based on the transverse flow distribution in the reactor core;

↓

S213: obtaining flow-induced vibration situation of the fuel assembly based on the lateral loads acting on different positions of the fuel assembly;

↓

S214: obtaining the deformation and vibration localization of the fuel assembly based on the flow-induced vibration situation of the fuel assembly.

FIG.5

S31: establishing a reactor core calculation model;

↓

S32: obtaining the neutron transport situation in the reactor core based on the water gap variation of the fuel assembly;

↓

S33: obtaining the heat generation power of the fuel assembly and the zonal loading of the fuel assembly;

↓

S34: based on the heat generation power of the fuel assembly, the neutron transport situation in the reactor core, the result of the fuel assembly low-frequency oscillation analysis and the zonal loading of the fuel assembly, obtaining a core nuclear power fluctuation amplitude among the fuel assemblies.

FIG.6

S41: determining whether the core nuclear power fluctuation amplitude among the fuel assemblies falls within a target range, and if not, establishing a target limit range of the temporal distribution characteristic and spatial distribution characteristic of the turbulence at the inlet region of each fuel assembly based on the target range;

S42: determining whether the temporal distribution characteristic and spatial distribution characteristic of the turbulence at the inlet region of each fuel assembly obtained in step S1 falls within respective target limit ranges,

—N→

modifying the internal three-dimensional structure of reactor pressure vessel,

Y

S43: repeating step S2 and step S3 to determine whether the core nuclear power fluctuation amplitude obtained in step S3 falls within the target range;

—N

FIG.7

S411: determining whether the core nuclear power fluctuation amplitude among the fuel assemblies falls within a target range, and if not, carrying out multi-parameter fitting on the flow distribution coefficient, fluid pulsation value, power spectral density, flow correlation coefficient, and turbulence energy spectrum with the low-frequency oscillation frequency and the core nuclear power fluctuation amplitude to obtain a multi-parameter fitting relationship;

S412: based on the multi-parameter fitting relationship and the target range of core nuclear power fluctuation amplitude, establishing target limit ranges of the flow distribution coefficient, the fluid pulsation value, the power spectral density, the flow correlation coefficient, and the turbulence energy spectrum satisfying the target range;

S42: determining whether the flow distribution coefficient, the fluid pulsation value, the power spectral density, the flow correlation coefficient, and the turbulence energy spectrum obtained in the step S1 falls within respective target limit ranges,

—N→

establishing at least one turbulence control region in the reactor pressure vessel, improving the dynamic flow field morphology in the reactor pressure vessel by adding a vortex-breaking component in the at least one turbulence control region, and repeating step S1

Y

S43: repeating the step S2 and step S3 to judge whether the core nuclear power fluctuation amplitude obtained in the step S3 falls within the target range;

—N—

FIG.8

## INTERNATIONAL SEARCH REPORT

| International application No. |
| --- |
| **PCT/CN2024/117604** |

| A. | CLASSIFICATION OF SUBJECT MATTER |
| --- | --- |

G21C17/00(2006.01)i; G06F30/28(2020.01)i; G06F113/08(2020.01)i; G06F119/14(2020.01)i

According to International Patent Classification (IPC) or to both national classification and IPC

| B. | FIELDS SEARCHED |
| --- | --- |

Minimum documentation searched (classification system followed by classification symbols)

G21C17/-, G06F30/-,G06F113/-,G06F119/- (IPC)

Documentation searched other than minimum documentation to the extent that such documents are included in the fields searched

Electronic data base consulted during the international search (name of data base and, where practicable, search terms used)

CNTXT, ENTXTC, DWPI, CNKI: 反应堆, 压力容器, 流体, 湍流, 旋涡, 堆芯, 功率, 波动, reactor, pressure vessel, fluid, turbulence, vortex, core, power, fluctuat+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 118448074 A (CHINA NUCLEAR POWER ENGINEERING CO., LTD. et al.) 06 August 2024 (2024-08-06) claims 1-15, description, paragraphs 0093-0189, and figures 1-8 | 1-15 |
| A | CN 114997081 A (SUN YAT-SEN UNIVERSITY) 02 September 2022 (2022-09-02) entire document | 1-15 |
| A | CN 114880969 A (SUN YAT-SEN UNIVERSITY) 09 August 2022 (2022-08-09) entire document | 1-15 |
| A | CN 111261232 A (XI'AN THERMAL POWER RESEARCH INSTITUTE CO., LTD.) 09 June 2020 (2020-06-09) entire document | 1-15 |
| A | CN 113011111 A (NUCLEAR POWER INSTITUTE OF CHINA) 22 June 2021 (2021-06-22) entire document | 1-15 |
| A | CN 110020479 A (NUCLEAR POWER INSTITUTE OF CHINA) 16 July 2019 (2019-07-16) entire document | 1-15 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 January 2025** | **14 January 2025** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

# EP 4 600 970 A1

**INTERNATIONAL SEARCH REPORT**

<table>
<tr><td colspan="2">International application No.</td></tr>
<tr><td colspan="2">**PCT/CN2024/117604**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | CN 114036871 A (NUCLEAR POWER INSTITUTE OF CHINA) 11 February 2022 (2022-02-11)<br>entire document | 1-15 |
| A | US 2013013282 A1 (TOSHIBA KK et al.) 10 January 2013 (2013-01-10)<br>entire document | 1-15 |
| A | 李兴等 (LI, Xing et al.). "加/减速流动下棒束通道内速度分布和湍流特性研究 (Velocity Distribution and Turbulence Characteristic in Rod Bundleunder Accelerating and Decelerating Flows)"<br>原子能科学技术 (Atomic Energy Science and Technology),<br>Vol. 55, No. 9, 30 September 2021 (2021-09-30), 1693-1699<br>entire document | 1-15 |

Form PCT/ISA/210 (second sheet) (July 2022)

**INTERNATIONAL SEARCH REPORT**
**Information on patent family members**

| International application No. |
| --- |
| **PCT/CN2024/117604** |

| Patent document cited in search report | | | Publication date (day/month/year) | Patent family member(s) | | | Publication date (day/month/year) |
| --- | --- | --- | --- | --- | --- | --- | --- |
| CN | 118448074 | A | 06 August 2024 | None | | | |
| CN | 114997081 | A | 02 September 2022 | None | | | |
| CN | 114880969 | A | 09 August 2022 | None | | | |
| CN | 111261232 | A | 09 June 2020 | None | | | |
| CN | 113011111 | A | 22 June 2021 | None | | | |
| CN | 110020479 | A | 16 July 2019 | None | | | |
| CN | 114036871 | A | 11 February 2022 | None | | | |
| US | 2013013282 | A1 | 10 January 2013 | JP | 2013019728 | A | 31 January 2013 |
| | | | | US | 8983810 | B2 | 17 March 2015 |

Form PCT/ISA/210 (patent family annex) (July 2022)